# EUROPEAN PATENT SPECIFICATION

(11) **EP 1 717 065 B1**
(45) Date of publication and mention of the grant of the patent: **12.08.2009**
(21) Application number: 06008889.5
(22) Date of filing: 28.04.2006
(51) Int. Cl.: B60C 25/138

(54) **Tool for fitting and removing vehicle wheel tyres**
Werkzeug für die Montage/ Demontage von Fahrzeugreifen
Outil pour le montage/ démontage des pneumatiques

(30) Priority: 29.04.2005 IT MO20050104
(43) Date of publication of application: 02.11.2006
(73) Proprietor: SICAM S.r.l., 42015 Correggio (Reggio Emilia) (IT)
(72) Inventor: Boni, Dido, 42100 Reggio Emilia (IT); Matteucci, Marco, 42010 Rio Saliceto (RE) (IT); Mazzali, Paolo, 41012 Carpi (MO) (IT)
(74) Representative: Brogi, Graziano

(56) References cited:
- EP-A- 0 838 354
- DE-B- 1 139 045
- FR-A- 1 333 160
- GB-A- 1 064 527

## Description

The present invention refers to a tyre-changing machine for fitting and removing vehicle wheel tyres.

It is known that vehicle wheels generally consist of a cylindrical metal rim featuring, at the axial ends, annular folds between which a slot-in fitting channel is defined for an elastic tyre, the side sections of which, the so-called "beads", are tightly fitted up against the annular folds.

Inside the tyre, an inner tube can be fitted or, in the case of "tubeless" type tyres, air under pressure can be directly introduced.

To perform the tyre fitting and removal operations onto and off the relevant rims, so-called tyre-changing machines are currently used that make it possible to remove the tyre from the relevant rim to carry out, for example, maintenance jobs or to replace the inner tube, the rim and/or the tyre itself, and then fit the same tyre or a replacement tyre back on the wheel rim.

Many types of wheel-changing machines exist, of different shapes and sizes depending on the size of the rims and tyres to be fitted/removed.

A particular type of tyre-changing machine is essentially made up of a support frame for means of gripping and rotating the rim of a wheel being worked on, and for a tool arm on which is fitted a tool for fitting and removing the tyre onto and off the rim.

Such tool, in particular, is fitted between the tyre beads and the corresponding annular folds of the rim to detach these, during removal, and to press on the beads inside the channel defmed between the annular folds, during fitting.

The tool features a pair of bead pressers combined integrally in a single rigid body, made of metal or plastic.

One of these bead pressers is normally shaped like a tang, meaning it is extended in an orthogonal direction to the rotation axis of the rim and features a substantially sharp end.

The other bead presser on the other hand can be shaped like a roller or, alternatively, like an extended wing in an orthogonal direction to the rotation axis of the rim different to that of the tang.

These traditional type tools are not without drawbacks among which the fact that, in some use configurations, they are not very functional and practical.

Considering that the known tools are made in a single rigid body in fact, the angle and the relevant distance between the tang and the roller, or between the tang and the wing, are set during manufacture.

Once flitted between the rim and the bead of the wheel being worked on therefore, they are unable to adapt correctly to the curvature of the rim. In some cases, for example, the bead pressing part shaped like a tang may have an end placed awkwardly distant from the annular fold of the rim and, consequently, it could cause excessive deformation of the tyre with which it is in contact, with the risk of ruining it.

Similarly, depending on the distance between the bead pressing parts, the thrust action of the tool can involve too large, or too small a surface of the tyre bead.

For this reason, each traditional tool can only be used on a small range of rims depending on their diameter.

To be able to operate correctly on wheels of very different sizes and avoid damaging the bead, it is therefore necessary to have at disposal several different tools, which, awkwardly, must be fitted/removed on/from the tyre-changing machines every time use is required, thus wasting a lot of time.

Here are also mentioned the embodiment disclosed by patent documents BE 1.139.045, FR 1.333.160 and GB 1,064,527, concerning machines and tools, according to the preamble of claim 1. However even these embodiments are not exempt from drawbacks, and in particular they exhibit a limited versatility and appear to be not much practical when used to regulate and adjust in a fine and precise way the position of the tyre bead presser parts with respect to wheel rims of different diameters and sizes.

The aim of the present invention is to eliminate the problems complained of above associated with the known technology and devise a tool for fitting and removing vehicle wheel tyres of universal use and suitable whatever the size of the wheel rim.

As part of such technical aim, another purpose of the present invention is to achieve the previous aims with a simple structure, of relatively practical implementation, safe use and effective operation, as well as of a relatively low cost.

This aim and these purposes are all achieved by the tyre-changing machine having the features recited by the main independent claim 1.

Further characteristics and advantages of this invention will appear even more evident from the detailed description of some preferred, but not exclusive, embodiments of a tool for fitting and removing vehicle wheel tyres, illustrated by way of non limiting example in the accompanying drawings, wherein:
figure 1 shows a perspective view of a tyre-changing machine equipped with the
tool according to the invention;
figure 2 shows a perspective view of a special form of embodiment of the tool according to the invention;
figure 3 shows a perspective view of an alternative form of embodiment of the tool according to the invention;
figure 4 shows a perspective view of a tool not forming part of the invention;

With special reference to such figures, a tool for fitting and removing vehicle wheel tyres has been generally designated by reference numeral 1.

The tool 1 is suitable for being fitted on a tyre-changing machine M equipped with a tool arm B and means of gripping and rotating rim C of a vehicle wheel; such means, in particular, are of the spindle Mn type with rotation axis R substantially vertical, although alternative forms of embodiment of the present invention cannot be ruled out in which such axis is horizontal or otherwise tilted.

The tool 1 comprises an attachment body 2 to arm B of the tyre-changing machine M and a first bead presser part 3 and a second bead presser part 4, that can be associated with the attachment body 2 and able to cooperate together to deform the bead of the tyre to be fitted/removed to/from the rim C.

The attachment body 2 consists of a plate which, in operating position, is kept substantially orthogonal to the rotation axis R.

The bead presser parts 3 and 4 are associated with the plate 2 through means of adjustment 5 of their relevant distance on the orthogonal surface to the rotation axis R.

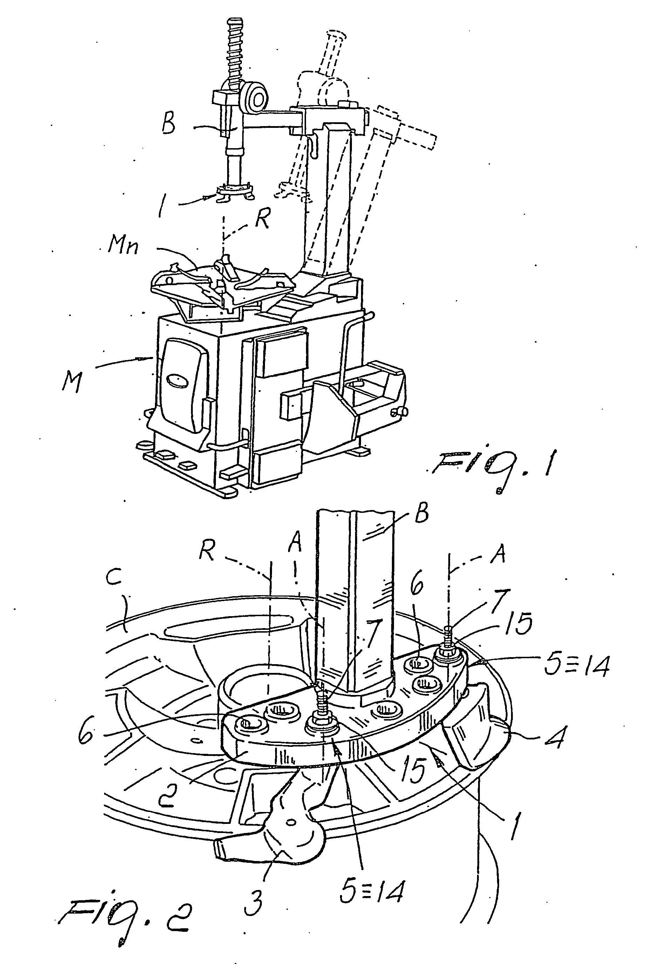

Such means of adjustment can have different embodiments; in figure 2, for example, these consist of a plurality of holes 6 obtained in the plate 2 at preset relevant distances, inside which a connecting pin 7 can be fitted and secured in a removable way associated with each bead presser part 3 and 4.

The choice of holes 6 inside which to fit the bead presser parts 3 and 4 is made according to the diameters of rim C.

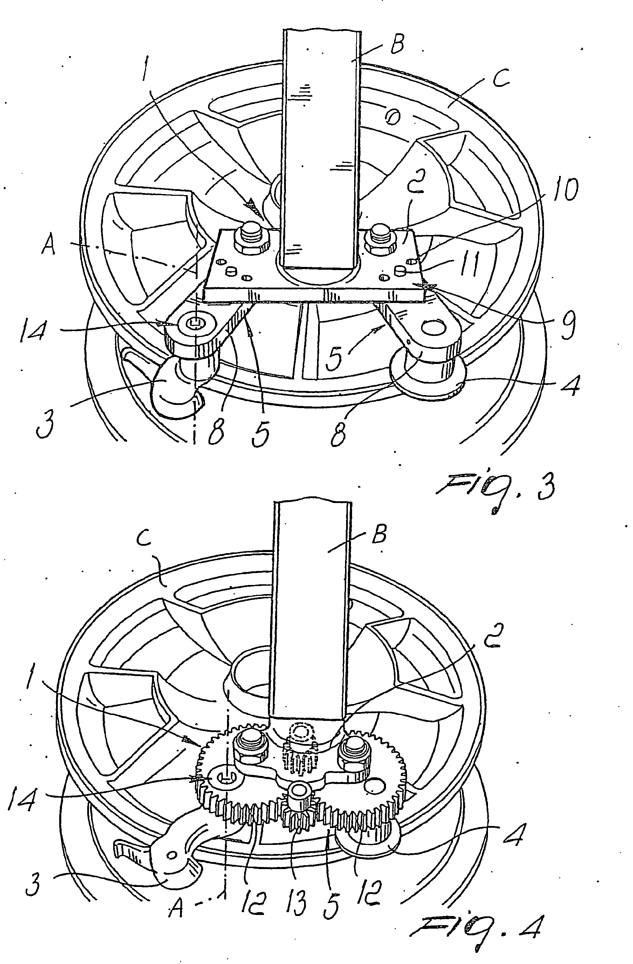

In an alternative form of embodiment, shown in figure 3, the means of adjustment 5 comprise two plates 8 associated with the attachment body 2 in a way such as to turn around an axis parallel with the rotation axis R and each supporting one of the bead presser parts 3 and 4.

In such form of embodiment, the rotation of the plates 8 with respect to the attachment body 2 permits moving the bead presser parts 3 and 4 away/closer to one another.

The means of adjustment 5 feature first removable means of retention 9 of the rotation of the plates 8 which, for example, comprise a plurality of first through eyelets 10 obtained in the plate 2 and a second through eyelet, not shown in detail in figure 3, obtained in each plate 8.

Such first removable means of retention also include a retention pin 11 for each plate 8, which can be fitted in the corresponding second eyelet and, alternatively, in one of the first eyelets 10 arranged coinciding with the second eyelet.

Once the retention pins 11 have been removed, the plates 8 regain their freedom to turn around themselves thus permitting the adjustment of the relevant distance between the bead presser parts 3 and 4.

In figure 4, showing a tool, not being part of the invention, the means of adjustment 5 comprise two gear wheels 12 locked together and fitted on the plate 2 so as to rotate around axes parallel to the rotation axis R.

The gear wheels 12 each support one of the bead presser parts 3 and 4 and their rotation makes it possible to move one bead presser part 3 and 4 away from/closer to the other.

In this form, second removable means of retention 13 of the rotation of gear wheels 12 are envisaged which, advantageously, consist of a toothed spool that can be associated with the attachment body 2 in a retention configuration in which this is simultaneously engaged with the teeth of the gear wheels 12, so as to prevent their rotation.

Once the toothed spool 13 has been removed, the gear wheels 12 are again free to turn around themselves permitting the adjustment of the relevant distance between the bead presser parts 3 and 4.

Many other forms of embodiment are possible of the means of adjustment 5 that are not shown in the illustrations; in one of these, for instance, the means of adjustment 5 are of the telescopic type and feature two or more tubular sections orthogonal to the rotation axis R which support the bead presser parts 3 and 4 and are fitted so as to slide the one inside the other so as to move the parts away/closer to one another at will.

The shape and dimensions of the first and second bead presser part 3 and 4 can be different.

Preferably, the first bead presser part 3 extends in an orthogonal direction to the rotation axis R and is fitted on tool 1 by interposing the means of rotation 14, of the cylindrical hinge type, around a swinging axis A parallel to the rotation axis R, able to allow the positioning of the part itself in a work configuration in which this is substantially tangent to one of the annular folds of rim C.

The second bead presser part 4 can also be extended in a orthogonal direction to the rotation axis R and, if necessary, be associated with the plate 2 through the means of rotation 14.

In the form of embodiment of the invention shown in figure 2, for example, the first bead presser part 3 is shaped like a tang and features a sharp tip able to be fitted between the rim C and the base of the tyre bead, while the second bead presser part 4 is wing shaped.

Both the bead presser parts 3 and 4 are extended in an orthogonal direction to the rotation axis R and are hinged to the plate 2 through the means of rotation 14.

In this particular form of embodiment, the coupling between the holes 6 and the connecting pins 7 is substantially cylindrical, so the bead presser parts 3 and 4 can turn inside them, the means of rotation 14 and the means of adjustment 5 coinciding together.

Advantageously, the tool 1 of figure 2 features temporary means of fastening 15 of the bead presser parts 3 and 4 in the work configuration, which, for example, consist of one or more retention nuts that can be screwed onto the purposely threaded connecting pins 7.

It cannot be ruled out however that each bead presser part 3 and 4 be left free to turn around the swinging axis A, the positioning in work configuration being provided by the crushing of the tyre on rim C during operation.

In the form of embodiment of the invention shown in figure 3 , the first bead presser part 3 is shaped like a tang and is associated with one of the plates 8, or with one of the gear wheels 12, through the means of rotation 14; the second bead presser part 4, on the other hand, is shaped like a roller hinged to the other plate 8, or other gear wheel 12, and is able to roll against the tyre during the rotation operation of rim C.

In the forms of embodiment shown in figure 3, the first bead presser part 3 is left free to turn around the swinging axis A, the positioning in work configuration being provided by the crushing of the tyre on rim C during operation.

It cannot be ruled out however that temporary means of fastening be provided identical to those described previously, able to keep the first bead presser part 3 blocked once this is arranged in work configuration.

It has in fact been seen how the described invention achieves the desired purposes and more specifically emphasis is placed on the fact that it is able to adapt easily to the sizes of the rim being worked on and, therefore, the tyre to be fitted/removed undergoes less stress compared to the traditional tools made in a single rigid body.

The invention thus conceived is susceptible of numerous modifications and variations, all of which falling within the scope of the appended claims.

Furthermore all the details can be replaced with others that are technically equivalent.

In practice, the materials used, as well as the shapes and dimensions, may be any according to requirements without departing from the protection scope of the appended claims.

## Claims

1. A tyre-changing machine (M) comprising means of gripping and rotating the rim (C) of a wheel around a rotation axis (R), and a tool (1) for fitting/removing vehicle wheel tyres on/from said wheel rim (C),
wherein said tool comprises at least one attachment body (2) to a tool arm (B) of said tyre-changing machine (M), and at least a first (3) and a second (4) bead presser part that can be associated with said attachment body (2) and are able to cooperate together to deform the bead of a tyre to be fitted/removed on/from said rim (C),
wherein said bead presser parts (3, 4) are associated with said attachment body (2) by interposing means of adjustment (5) of their relevant distance on a substantially orthogonal surface to said rotation axis (R), and
wherein said means of adjustment (5) comprise means of rotation (14) of at least one (3) of said bead presser parts on said attachment body (2) around a swinging axis (A) substantially parallel to said rotation axis (R),
said tyre changing machine (M) being **characterized in that** said means of adjustment (5) comprise a plurality of holes (6) obtained in said attachment body (2) at preset relevant distances, inside which a connecting pin (7) associated with said at least one bead presser part (3) can be selectively fitted, and **in that** the coupling between said holes (6) and said connecting pin (7) is substantially cylindrical for rotation of said connecting pin (7) in each of said holes (6),
whereby said means of rotation (14), as associated with each of said holes (6), coincide with said means of adjustment (5) and allow the positioning of said at least one bead presser part (3) in a work configuration in which it is substantially tangent to one of the annular folds of said rim (C).

2. Machine (M) according to claim 1, **characterized in that** said at least one bead presser part (3) substantially extends in a substantially orthogonal direction to said rotation axis (R).

3. Machine (M) according to claims 1 or 2, **characterized in that** it comprises temporary means of fastening (15) of said at least one bead presser part (3) in said work configuration.

4. Machine (M) according to one or more of the preceding claims, **characterized in that** the other (4) of said two bead presser parts (3, 4) extends in a substantially orthogonal direction to said rotation axis (R).

5. Machine (M) according to one or more of the preceding claims, **characterized in that** said means of adjustment (5) comprise means of rotation (14) of the other (4) of said bead presser parts (3, 4) on said attachment body (2) around a swinging axis (A) substantially parallel to said rotation axis (R), and **in that** said other bead presser part (4) is associated with a respective connecting pin (7) suitable to be selectively fitted in said plurality of holes (6).

6. Machine (M) according to one or more of the preceding claims, **characterized in that** the other (4) of said two bead presser parts is substantially shaped like a roller.

## Patentansprüche

1. Eine Reifenwechselmaschine (M) mit Vorrichtungen zum Ergreifen und Drehen der Felge (C) eines Rades um eine Drehachse (R) und einem Werkzeug (1) zum Montieren/Demontieren von Fahrzeugreifen auf/von der Radfelge (C),
bei der das Werkzeug mindestens einen Befestigungskörper (2) an einem Werkzeugarm (B) der Reifenwechselmaschine (M) und mindestens einen ersten (3) und einen zweiten (4) Wulstdrückteil aufweist, die mit dem Befestigungskörper (2) verbunden werden können und fähig sind, gemeinsam zusammenzuwirken, um den wulst eines Reifens, der auf/von der Felge (C) montiert/demontiert werden soll, zu verformen,
bei der die Wulstdrückteile (3, 4) durch zwischenschaltung einer Vorrichtung (5) zum Anpassen ihres jeweiligen Abstandes auf einer im Wesentlichen rechteckigen Fläche zur Drehachse (R) mit dem Befestigungskörper (2) verbunden sind, und
bei der die Anpassvorrichtung (5) eine Vorrichtung (14) zum Drehen mindestens eines (3) der Wulstdrückteile auf dem Befestigungskörper (2) um eine Schwenkachse (A) im Wesentlichen parallel zur Drehachse (R) aufweist,
wobei die Reifenwechselmaschine (M) **dadurch gekennzeichnet ist, dass** die Anpassvorrichtung (5) eine Vielzahl von Löchern (6) in entsprechenden vorgegebenen Abständen im Befestigungskörper (2) aufweist, in dem ein Verbindungsstift (7), der mit dem mindestens einen Wulstdrückteil (3) verbunden ist, nach Wahl befestigt werden kann, und **dadurch**, dass die Kupplung zwischen den Löchern (6) und dem Verbindungsstift (7) im Wesentlichen zylindrisch für die Drehung des Verbindungsstiftes (7) in jedem der Löcher (6) ist,
wodurch die Drehvorrichtung (14) in ihrer Verbindung mit jeweils einem der Löcher (6) mit der Anpassvorrichtung (5) deckungsgleich ist und die Positionierung des mindestens einen Wulstdrückteils (3) in einer Arbeitskonfiguration erlaubt, in der er im Wesentlichen an einer der ringförmigen Falten der Felge (C) anliegt.

2. Maschine (M) gemäß Anspruch 1, **dadurch gekennzeichnet, dass** der mindestens eine Wulstdrückteil (3) im Wesentlichen in einer im Wesentlichen rechtwinkligen Richtung zur Drehachse (R) verläuft.

3. Maschine (M) gemäß Anspruch 1 oder 2, **dadurch gekennzeichnet, dass** sie temporäre Vorrichtungen (15) zum Befestigen des mindestens einen Wulstdrückteils (3) in der Arbeitskonfiguration aufweist.

4. Maschine (M) gemäß einem oder mehr der vorangegangenen Ansprüche, **dadurch gekennzeichnet, dass** der andere (4) der zwei Wulstdrückteile (3, 4) in einer im Wesentlichen rechtwinkligen Richtung zur Drehachse (R) verläuft.

5. Maschine (M) gemäß einem oder mehr der vorangegangenen Ansprüche, **dadurch gekennzeichnet, dass** die Anpassvorrichtung (5) eine Vorrichtung (14) zum Drehen des anderen (4) der Wulstdrückteile (3, 4) auf dem Befestigungskörper (2) um eine Schwenkachse (A) im Wesentlichen parallel zur Drehachse (R) aufweist, und **dadurch**, dass der andere Wulstdrückteil (4) mit einem entsprechenden Verbindungsstift (7) verbunden ist, der für die Befestigung nach wahl in der vielzahl von Löchern (6) geeignet ist.

6. Maschine (M) gemäß einem oder mehr der vorangegangenen Ansprüche, **dadurch gekennzeichnet, dass** der andere (4) der zwei Wulstdrückteile im Wesentlichen wie eine Rolle geformt ist.

## Revendications

1. Machine de changement de pneumatiques (M) comprenant des moyens d'attache et de rotation pour accrocher et pivoter la jante (C) d'une roue autour d'un axe de rotation (R), et un outil (1) pour monter/démonter les pneumatiques des roues des véhicules sur/de ladite jante (C), où ledit outil comprend au moins un corps d'attache (2) au bras porte-outils (B) de ladite machine de changement de pneumatiques (M), et au moins un premier (3) et un deuxième (4) élément pousse-talon, associables audit corps d'attache (2) et aptes à coopérer entre eux pour déformer le talon d'un pneumatique qu'on doit monter/démonter sur/de ladite jante (C), où lesdits éléments pousse-talon (3, 4) sont associés audit corps d'attache (2) par l'interposition de moyens de réglage (5) aptes à régler la distance relative entre les deux éléments sur un plan sensiblement orthogonal par rapport audit axe de rotation (R), où lesdits moyens de réglage (5) comprennent des moyens de rotation (14) d'au moins un (3) desdits éléments pousse-talon susdit corps d'attache (2) autour d'un axe de basculement (A) sensiblement parallèle audit axe de rotation (R), ladite machine de changement de pneumatiques (M) ***caractérisée en ce que*** lesdits moyens de réglage (5) comprennent au moins une pluralité de trous (6) obtenus dans ledit corps d'attache (2) à des distances relatives préétablies et dans lesquels ont peut insérer un goujon de liaison (7) associé à au moins un desdits éléments pousse-talon (3), et ***en ce que*** l'accouplement entre lesdits trous (6) et ledit goujon de liaison (7) est sensiblement cylindrique pour la rotation dudit goujon de liaison (7) dans chacun desdits trous (6), par lequel lesdits moyens de rotation (14), associés avec chacun desdits trous (6), coincident avec lesdits moyens de réglage (5) et permettent le positionnement d'au moins un desdits éléments pousse-talon (3) dans une configuration de travail dans laquelle il est sensiblement tangent par rapport à un des plis annulaires de ladite jante (C).

2. Machine (M) selon la revendication 1, ***caractérisée en ce que*** au moins un desdits éléments pousse-talon (3) est sensiblement allongé selon une direction sensiblement orthogonale par rapport audit axe de rotation (R).

3. Machine (M) selon la revendication 1 ou 2, ***caractérisée en ce* qu'**elle comprend des moyens de fixage temporaire (15) d'au moins un desdits éléments pousse-talon (3) dans ladite configuration de travail.

4. Machine (M) selon l'une ou plusieurs des revendications précédentes, ***caractérisée en* ce *que*** l'autre (4) desdits deux éléments pousse-talon (3, 4) est allongé selon une direction sensiblement orthogonale par rapport audit axe de rotation (R).

5. Machine (M) selon l'une ou plusieurs des revendications précédentes, ***caractérisée en ce que*** lesdits moyens de réglage (5) comprennent des moyens de rotation (14) de l'autre (4) desdits éléments pousse-talon (3, 4) susdit corps d'attache (2) autour d'un axe de basculement
(A) sensiblement parallèle à ledit axe de rotation (R) et ***en ce que*** ledit autre élément pousse-talon (4) est associé à un goujon de liaison respectif (7) apte à être placé sélectivement dans ladite pluralité de trous (6).

6. Machine (M) salon l'une ou plusieurs des revendications précédentes, ***caractérisée en ce que*** l'autre (4) desdits deux éléments pousse-talon est sensiblement formé comme une roulette.
